Europäisches Patentamt

European Patent Office

Office européen des brevets

(19)

(11) Numéro de publication: **0 112 427**
**B1**

(12) **FASCICULE DE BREVET EUROPÉEN**

(45) Date de publication du fascicule du brevet:
21.09.88

(51) Int. Cl.⁴: **G 05 B 19/04**

(21) Numéro de dépôt: **82430044.6**

(22) Date de dépôt: **28.12.82**

(54) **Dispositif de commande logique programmable.**

(43) Date de publication de la demande:
**04.07.84 Bulletin 84/27**

(45) Mention de la délivrance du brevet:
**21.09.88 Bulletin 88/38**

(84) Etats contractants désignés:
**DE FR GB IT**

(56) Documents cité:
**FR-A-2 268 303**
**FR-A-2 324 046**
**US-A-3 944 987**
**US-A-4 326 207**

(73) Titulaire: **International Business Machines Corporation, Old Orchard Road, Armonk, N.Y. 10504 (US)**
(84) Etats contractants désignés: **DE GB IT**

(73) Titulaire: **Compagnie IBM FRANCE, 5 Place Vendôme, F-75000 Paris 1er (FR)**
(84) Etats contractants désignés: **FR**

(72) Inventeur: **Vautier, Rémi Alfred Marcel Robert, 139 Avenue de la Lanterne, F-06200 Nice (FR)**

(74) Mandataire: **de Pena, Alain, Compagnie IBM France Département de Propriété Intellectuelle, F-06610 La Gaude (FR)**

**0 112 427**

## Description

### Domaine Technique

La présente invention concerne les systèmes de commande à programme numérique, et plus particulièrement un contrôleur logique programmable qui analyse l'état binaire d'un ensemble d'entrées et commande l'état binaire d'un ensemble de sorties en fonction du résultat de cette analyse et d'une logique prédéterminée dans un programme.

### Etat de la Technique

L'architecture logique de beaucoup d'unités de traitement de données est basée sur un processeur principal connecté à plusieurs dispositifs d'entrée/sortie tels que détecteurs, relais, etc. à travers des adaptateurs. Pour la plupart des fonctions que doit réaliser l'unité de traitement, on doit déterminer la part de ces fonctions qui doit être réalisée par le processeur principal et celle qui doit l'être par les adapteurs. Jusqu'ici les adaptateurs étaient généralement des dispositifs à logique câblée et la majeure partie des fonctions étaient réalisée par le processeur principal. Les contrôleurs logiques programmables peuvent avantageusement être utilisés comme adapteurs tout en possédant plus de flexibilité et plus de possibilités de traitement des signaux logiques. En outre, alors qu'un adaptateur câblé n'est conçu que pour une application bien déterminée, un même contrôleur logique programmable peut être utilisé pour une pluralité d'applications, la personnalisation du contrôleur n'intervenant qu'au niveau du programme, et peut faire l'objet d'une production en masse qui en abaisse le coût.

Le brevet français FR-A-2 037 035 décrit un contrôleur logique programmable qui comprend principalement une mémoire de programme dans laquelle est enregistrée la suite d'instructions, un sélecteur d'entrée, un sélecteur de sortie et une bascule d'état. Le contrôleur utilise un jeu de sept instructions, chacune d'elles comprenant un code opération et un champ d'adresse. La bascule d'état est commandée par deux instructions qui respectivement la mettent à l'état binaire 1 et 0 si l'entrée sélectionnée est à un premier et un second états. Le jeu d'instructions comprend en outre deux instructions pour, indépendamment de l'état de la bascule d'état, mettre la sortie sélectionnée à deux états prédéterminés, respectivement, et trois instructions de saut.

L'inconvénient du contrôleur logique décrit dans le brevet français précité réside dans le fait que son jeu d'instructions comprend un nombre relativement élevé d'instructions, ce qui entraîne une difficulté de programmation pour des utilisateurs non programmeurs et une certaine lenteur dans la réalisation des fonctions. On se référera utilement aux exemples donnés en fin de cette demande de brevet qui permettent de comparer ce contrôleur et celui de l'invention. Un autre inconvénient du contrôleur logique décrit dans le brevet français précité est qu'il ne permet pas de mémoriser des événements ou des données et de les utiliser par la suite.

Le brevet français FR-A-2 163 150 décrit un contrôleur logique programmable qui utilise un jeu d'instructions limité à une seule instruction qui comprend un bit de condition de sortie, un champ d'adresse de sortie, un bit de condition d'entrée, un champ d'adresse d'entrée et deux champs d'adresse de saut, ce qui amène le nombre de bits de l'instruction à 32. L'inconvénient du contrôleur logique décrit dans ce dernier brevet français réside dans le fait que le nombre élevé de bits par instruction augmente la complexité de la programmation et dans le fait que sa partie matérielle, par opposition à sa partie programme, est très particulière et présente un aspect multi-tâche très prononcé qui complique grandement la réalisation de fonctions simples. Ce contrôleur logique ne permet pas non plus de mémoriser des événements ou des données pour une utilisation ultérieure.

### Exposé de l'Invention

Un objet de l'invention est de fournir un dispositif de commande logique programmable qui ne possède pas les inconvénients ci-dessus, et qui est particulier par sa simplicité et la facilité de sa programmation.

Un autre objet de l'invention est de fournir un contrôleur logique programmable qui soit doté d'une mémoire de travail lui permettant de traiter des données.

D'une manière générale, le dispositif de commande logique programmable, tel que revendiqué dans la revendication 1, est du type comprenant plusieurs entrées et plusieurs sorties, des moyens de sélection d'entrées pour sélectionner une des entrées du dispositif de commande logique, des moyens de sélection de sorties pour sélectionner l'une des sorties du dispositif de commande logique, une mémoire de contrôle dans laquelle est emmagasinée une suite d'instructions, des moyens d'adressage pour adresser séquentiellement la mémoire de contrôle, des moyens de décodage pour décoder les instructions lues de la mémoire de contrôle, et une bascule de condition, caractérisé en ce que:

les instructions emmagasinées dans la mémoire de contrôle sont choisies exclusivement parmi des instructions de trois types, les instructions du premier type (écriture) etdu deuxième type (lecture) comprenant exclusivement un code opération, un bit de condition et un champ d'adresse, et les instructions du troisième

2

type (saut) comprenant exclusivement un code opération et un champ d'adresse,

et en ce qu'il comprend en outre:

des moyens de comparaison pour comparer l'état de l'entrée sélectionnée par lesdits moyens de sélection d'entrées en réponse au contenu du champ d'adresse de l'instruction lue de la mémoire de contrôle, à l'état du bit de condition contenu dans cette instruction, lorsque cette dernière est une instruction du premier type,

des moyens pour mettre la bascule de condition dans un premier ou second état selon que le résultat de la comparaison fourni par les moyens de comparaison est positif ou négatif, lorsque l'instruction lue de la mémoire de contrôle est du premier type,

des moyens pour transférer sur la sortie sélectionnée par lesdits moyens de sélection de sorties en réponse au contenu du champ d'adresse de l'instruction lue de la mémoire de contrôle, l'état ou l'état inverse, du bit de condition contenu dans cette instruction, selon que la bascule de condition est dans son premier ou second état, lorsque cette instruction est une instruction du deuxième type, et

des moyens pour appliquer le contenu du champ d'adresse d'une instruction du troisième type lue de la mémoire de contrôle aux moyens d'adressage, uniquement lorsque la bascule de condition est à son premier état.

Selon un un mode particulier de réalisation de l'invention, le dispositif de commande logique programmable comprend une mémoire à accès aléatoire qui est adressée par le champ d'adresse de l'instruction lue de la mémoire et qui fonctionne en mode lecture ou écriture selon qu'une instruction du premier ou du second type est lue de la mémoire.

D'autres objets, caractéristiques et avantages de la présente invention ressortiront mieux de l'exposé qui suit, fait en référence aux dessins annexés à ce texte, qui représentent un mode de réalisation préféré de celle-ci.

## Brève Description des Figures

La figure 1 représente le bloc diagramme d'un contrôleur logique programmable conforme à l'invention.

La figure 2 est un diagramme des temps qui illustre la forme des signaux de chronologie utilisés par le contrôleur logique programmable de l'invention.

La figure 3 représente le bloc diagramme d'un perfectionnement au contrôleur logique programmable de la figure 1.

## Description Détaillée de l'Invention

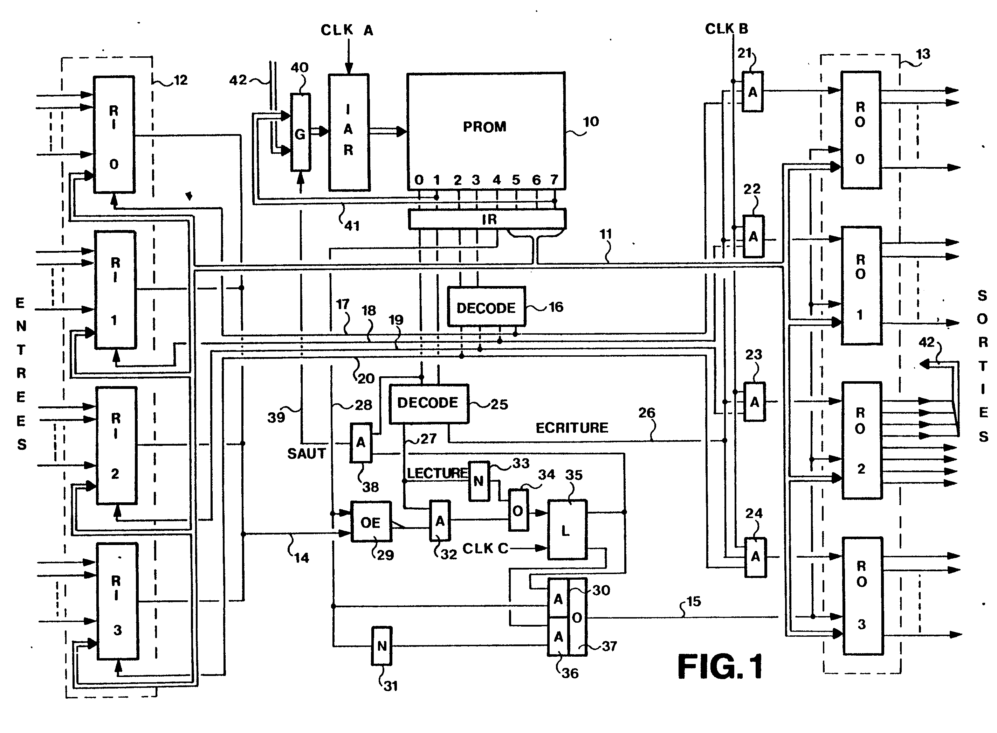

On a représenté sur la figure 1 le bloc diagramme d'un dispositif de commande logique programmable conforme à l' invention. Le contrôleur logique programmable est commandé par un programme de contrôle qui est contitué par une suite d'instructions de huit bits et qui est emmagasiné dans une mémoire de contrôle 10 qui peut être avantageusement constituée par une mémoire morte programmable PROM. La mémoire de contrôle 10 est adressée par le contenu d'un registre d'adresse d'instruction IAR qui, dans l'exemple de réalisation illustré sur la figure, est constitué par un compteur dont le contenu est augmenté séquentiellement par un signal d'horloge CLK A qui rythme le cycle de fonctionnement du contrôleur. Les instructions lues de la mémoire de contrôle 10 sont chargées dans un registre d'instruction à huit étages IR. Les bits 5, 6 et 7 de l'instruction stockée dans le registre d'instruction IR sont appliqués par un bus d'adresse 11 à un sélecteur d'entrées 12 et à un sélecteur de sorties 13. Le sélecteur d'entrées 12 connecte sélectivement l'une d'une pluralité d'entrées à une ligne d'entrée de données 14. Dans l'exemple de réalisation illustré sur la figure 1, il y a trente deux entrées et le sélecteur d'entrées 12 est constitué par quatre multiplexeurs à huit entrées, référencés RI 0 à RI 3, du type 74LS251 commercialisé par Texas Instruments Inc. Le bus d'adresse 11 et la ligne d'entrée de données 14 sont connectés respectivement à l'entrée d'adresse et à la sortie de chacun des multiplexeurs RI 0 à RI 3. Le sélecteur de sorties 13 connecte sélectivement une ligne de sortie de données 15 à une pluralité de sorties. Dans l'exemple de réalisation illustré sur la figure 1, il y a trente deux sorties et le sélecteur 13 est constitué par quatre démultiplexeurs à mémoire à huit sorties référencées RO 0 à RO 3, du type 74LS259 commercialisé par Texas Instruments Inc. On rappelle qu'un démultiplexeur à mémoire est constitué principalement par un démultiplexeur dont l'état des sorties est mémorisé dans des bascules à verrouillage. Le bus d'adresse 11 et la ligne de sortie de données 15 sont connectés respectivement à l'entrée d'adresse et à l'entrée de chacun des démultiplexeurs RO 0 à RO 3. Les bits 2 et 3 de l'instruction stockée dans le registre d'instruction IR sont appliqués à un circuit de décodage 16 qui active sélectivement une des quatre sorties reliées respectivement à des lignes 17, 18, 19 et 20 selon la valeur des bits 2 et 3. Les lignes 17, 18, 19 et 20 sont reliées respectivement à l'entrée de sélection des multiplexeurs RI 0 à RI 3 et à une entrée de quatre portes ET 21, 22, 23 et 24 dont les sorties sont reliées respectivement à l'entrée de sélection des démultiplexeurs RO 0 à RO 3. Les bits 0 et 1 de l'instruction stockée dans le registre d'instruction IR sont appliqués à un circuit de décodage 25 qui a une de ses deux sorties reliée à une ligne Ecriture 26 qui est elle-même reliée à une entrée des portes ET 21 à 24. Un signal de chronologie CLK B qui est une version retardée du signal de chronologie CLK A est appliqué aussi aux portes ET 21 à 24. L'autre sortie du circuit de décodage 25 est reliée à une ligne Lecture 27. Le bit 4 de l'instruction stockée dans le registre d'instruction IR est appliqué par une ligne 28 à une entrée d'un circuit OU Exclusif inversé 29, dont l'autre entrée est reliée à la ligne d'entrée de données 14, à une entrée d'une porte ET 30, et à l'entrée d'un inverseur 31. La sortie du circuit OU Exclusif inversé 29 et la ligne Lecture 27 sont appliquées à une porte ET 32. La sortie de la porte ET 32 et la sortie d'un inverseur 33 qui a son entrée reliée à la ligne 27, sont appliquées à une porte OU 34 qui a sa sortie reliée à l'entrée d'une bascule à verrouillage de condition 35. L'entrée d'horloge de la bascule de condition 35 reçoit un signal de chronologie CLK C qui est une version retardée du signal de chronologie CLK B. La sortie vraie de la bascule de condition 35 est appliquée à l'autre entrée de la porte ET 30. La sortie complémentaire de la bascule de condition 35 et la sortie de l'inverseur 31 sont appliquées à une porte ET 36. Les sorties des portes ET 30 et 36 sont appliquées à une porte OU 37 dont la sortie est reliée à la ligne de sortie de données 15. Le bit 0 de l'instruction stockée dans le registre IR et la sortie vraie de la bascule de condition 35 sont appliqués à une porte ET 38 dont la sortie est reliée à une ligne Saut 39 qui commande une porte de transfert 40. La porte de transfert 40 reçoit par un bus 41 les bits 1 à 7 de l'instruction lue de la mémoire de contrôle 10 et par un bus 42 quatre des huit sorties du démultiplexeur RO 2.

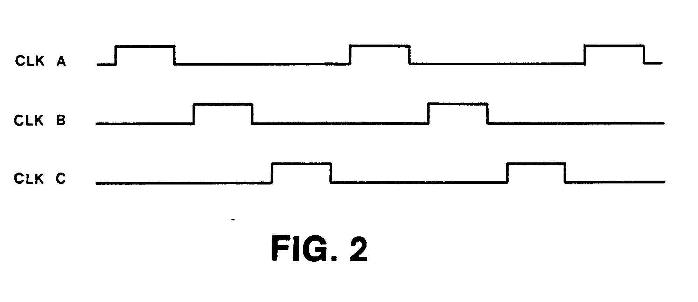

La figure 2 illustre la forme des signaux de chronologie CLK A, CLK B et CLK C.

Le contrôleur logique programmable de l'invention utilise un jeu d'instructions très limité qui ne comprend que trois instructions de huit bits qui sont: LECTURE, ECRITURE et SAUT.

## Instruction LECTURE

L'instruction LECTURE est utilisée pour lire l'état binaire d'une ligne d'entrée sélectionnée et mettre la bascule de condition à un état binaire déterminé selon l'état de la ligne d'entrée sélectionné et la valeur d'un bit de condition contenu dans l'instruction. L'instruction LECTURE a le format suivant.

| 0 | 0 | b2 | b3 | b4 | b5 | b6 | b7 |
|---|---|----|----|----|----|----|----|
| 0 | 1 | 2 | 3 | 4 | 5 | 6 | 7 |

| | |
|---|---|
| Les bits 0 et 1 | sont à 0 et spécifient l'instruction LECTURE. Ils constituent le code opération de l'instruction. |
| Les bits b2 et b3 | sélectionnent un des quatre multiplexeurs RI 0 à RI 3. |
| Les bits b5, b6, b7 | sélectionnent une entrée parmi les huit entrées d'un multiplexeur. |
| Le bit b4 | est le bit de condition. |

A la fin d'une instruction LECTURE la bascule de condition est:
- mise à 1 si l'état de la ligne d'entrée sélectionnée est identique à celui du bit de condition, et
- mise à 0 si l'état de la ligne d'entrée sélectionnée est différent de celui du bit de condition.

Exemple d'instruction LECTURE: 00101011

L'entrée 3 du multiplexeur R2 est comparée à "1", et la bascule de condition est mise à un état qui dépend du résultat de la comparaison.

En langage assembleur, l'instruction LECTURE s'écrit:
- RO Ix

  Pour spécifier lecture de l'entrée du multiplexeur I, avec bit de condition à "1", et
- RZ Ix

  pour spécifier lecture de l'entrée du multiplexeur I, avec bit de condition à "0".

## Instruction ECRITURE

L'instruction ECRITURE est utilisée pour écrire l'état de la bascule de condition ou son inverse sur une sortie sélectionnée, selon la valeur d'un bit de condition contenu dans l'instruction. L'instruction ECRITURE a le format suivant:

| 0 | 1 | b2 | b3 | b4 | b5 | b6 | b7 |
|---|---|----|----|----|----|----|----|
| 0 | 1 | 2 | 3 | 4 | 5 | 6 | 7 |

| | |
|---|---|
| Les bits 0 et 1 | sont respectivement à 0 et 1 et spécifient l'instruction ECRITURE. Ils constituent le code opération de l'instruction. |
| Les bits b2 et b3 | sélectionnent un des quatre démultiplexeurs RO 0 à RO 3 |
| Les bits b5 à b7 | sélectionnent une sortie parmi les huit sorties d'un démultiplexeur. |

Le bit b4 est le bit de condition.
Si b4 = 1 l'état de la bascule de condition est écrit sur la sortie sélectionnée.
Si b4 = 0 l'état inverse de celui de la bascule de condition est écrit sur la sortie sélectionnée.
Après une instruction ECRITURE, la bascule de condition est mise à "1".

Exemple d'instruction ECRITURE: 01011101

La sortie 5 du démultiplexeur RO 1 est mise à 1 ou à 0 selon que la bascule de condition est à 1 ou à 0. En langage assembleur, l'instruction ECRITURE s'écrit:

WO Ox
pour spécifier: écriture de l'état de la bascule de condition sur la sortie x du démultiplexeur 0, et

WZ Ox
pour spécifier: écriture de l'état inverse de celui de la bascule de condition sur la sortie du démultiplexeur 0.

**Instruction SAUT**

L'instruction SAUT est utilisée pour sauter ou non à une adresse d'instruction contenue dans l'instruction SAUT selon que la bascule de condition est à 1 ou 0. L'instruction SAUT a le format suivant:

| 1 | b1 | b2 | b3 | b4 | 05 | 06 | b7 |
|---|----|----|----|----|----|----|----|
| 0 | 1 | 2 | 3 | 4 | 5 | 6 | 7 |

Le bit 0 est à 1 et spécifie une instruction SAUT. Il constitue à lui seul le code opération de l'instruction.

Les bits b1 à b7 spécifient l'adresse de saut dans un bloc de 128 instructions.

Le saut à l'adresse spécifiée dans l'instruction saut n'est effectué que si l'état de la bascule de condition est 1.

Après une instruction SAUT, la bascule de condition est mise à 1.

En langage assembleur, l'instruction SAUT s'écrit:

J T, T spécifiant l'adresse de saut.

On remarquera que, puisqu'à la fin de l'exécution d'une instruction ECRITURE ou d'une instruction SAUT la bascule de condition est mise à 1, lorsqu'une instruction ECRITURE est exécutée après une instruction ECRITURE ou une instruction SAUT, le bit de condition est une donnée immédiate, c'est-àdire que le bit de condition est écrit directement sur la sortie sélectionnée.

On décrira maintenant le fonctionnement du contrôleur logique illustré sur la figure 1. Le contenu du registre d'adresse d'instruction IAR est augmenté d'une unité à chaque transition positive du signal de chronologie CLK A. Le contenu du registre IAR adresse la mémoire de contrôle 10 et l'instruction adressée en est lue et stockée dans le registre d'instruction IR. Si les bits 0 et 1 dans le registre d'instruction IR sont tous deux 0, spécifiant ainsi une instruction LECTURE, le circuit de décodage 25 fait passer la ligne Lecture 27 au niveau haut et la ligne Ecriture 26 au niveau bas. Ce niveau bas force la sortie des portes ET 21 à 24 à un niveau bas, inhibant l'entrée de sélection des démultiplexeurs RO 0 à RO 3. Le bit 0 dans le registre d'instruction IR étant 0, la sortie de la porte ET 38 est au niveau bas et la ligne Saut 39 découple les bus 41 et 42 du registre IAR.

Le circuit de décodage 16 en réponse à la valeur des bits 2 et 3 de l'instruction stockée dans le registre IR fait passer au niveau haut l'une des lignes 17 à 20. En supposant à titre d'exemple que l'instruction LECTURE dans le registre IR soit 00101011, le circuit de décodage 16 fera passer la ligne 18 au niveau haut et les lignes 17, 19 et 20 au niveau bas, sélectionnant le multiplexeur RI 1 et inhibant les multiplexeurs RI 0, RI 2 et RI 3. Les bits 5 à 7 du registre IR sont appliqués par le bus d'adresse 11 aux multiplexeurs RI 0 à RI 3 et, dans l'exemple ci-dessus, sélectionne l'entrée 3 du multiplexeur RI 1, les autres multiplexeurs étant inhibés. L'état de l'entrée 3 du multiplexeur RI 0 est alors transféré sur la ligne d'entrée de données 14 et comparé au bit 4 (bit de condition) dans le registre IR au moyen du circuit OU Exclusif inversé 29. Si le résultat de la comparaison est positif, le circuit OU Exclusif inversé 29 produit au niveau haut qui est appliqué à l'entrée d'enclenchement de la bascule de condition 35 à travers les portes 32 et 34. A la transition positive du signal CLK C, la bascule de condition 35 est mise à 1. Si le résultat de la comparaison est négatif le circuit OU Exclusif inversé 29 produit un niveau bas, et la bascule de condition est mise à 0 à la transition positive du signal CLK C.

Si les bits 0 et 1 dans le registre IR ont respectivement les valeurs 0 et 1, spécifiant une instruction ECRITURE, le circuit de décodage 25 fait passer la ligne Ecriture 26 au niveau haut et la ligne Lecture 27 au niveau bas. Ce niveau bas force la sortie de la porte ET 32 au niveau bas, découplant la ligne d'entrée de données 14 de la bascule de condition 35. Le bit 0 dans le registre IR étant à 0, la ligne Saut 39 est au niveau bas et découple les bus 41 et 42 du registre d'adresse d'instruction IAR. Selon la valeur des bits 2 et 3 dans le registre IR, le circuit de décodage 16 fait passer l'une des lignes 17 à 20, par exemple la ligne 18, au niveau haut présélectionnant le démultiplexeur RO 1, et les autres de ces lignes au nivau bas, inhibant les autres démultiplexeurs. Si le bit 4 (bit de condition) dans le registre IR est à 1, l'état de la sortie vraie de la bascule de condition 35 est transféré sur la ligne de sortie de données 15 à travers les portes 30 et 37. Si ce bit 4 est à 0, l'état de la sortie complémentaire de la bascule de condition 35 est transféré sur la ligne de sortie de données 15 à travers les portes 36 et 37. A la transition positive du signal de chronologie CLK B, le démultiplexeur RO 1 est sélectionné à travers la porte ET 22 et l'état de la ligne d'entrée de données est transféré sur la sortie du démultiplexeur RO 1 spécifiée par le contenu du bus d'adresse 1. La ligne Lecture 27 étant au niveau bas, la sortie de l'inverseur 33 est au niveau haut et la bascule de condition 35 est mise à 1 à la transition positive du signal de chronologie CLK C.

On décrira maintenant l'exécution d'une instruction SAUT en faisant tout d'abord abstraction de l'existence du bus 42 qui relie quatre des sorties du démultiplexeur RO 2 à la porte de transfert 40. Lorsqu'une instruction SAUT est lue de la mémoire de contrôle 10 et chargée dans le registre IR, le bit 0 dans ce dernier est à l et le circuit de décodage 25 fait passer au niveau bas les lignes Ecriture 26 et Lecture 27, découplant les démultiplexeurs RO 0 à RO 3 de la ligne de sortie de données 15, et la ligne d'entrée de données de la bascule de condition 35. Si la bascule de condition 35 est à 1, la ligne Saut 39 est au niveau haut, et l'adresse de saut spécifiée par les bits 1 à 7 de l'instruction lue de la mémoire de contrôle 10 est appliquée à l'entrée de pré-enclenchement du registre d'adresse d'instruction IAR. Cette adresse est rendue disponible à la sortie du registre IAR à la transition positive suivante du signal de chronologie CLK A. Si la bascule de condition 35 est à 0, la ligne Saut 39 est au niveau bas et l'adresse de saut n'est pas appliquée au registre IAR. A la transition positive du signal de chronologie CLK C, la bascule de condition 35 est mise à 1 en réponse au niveau bas de la ligne Lecture 27.

Dans une instruction SAUT, l'adresse de saut est définie par sept bits, et ne permet donc d'adresser que 128 instructions. L'utilisation de l'instruction SAUT sans le perfectionnement décrit ci-après limite la capacité de la mémoire de contrôle à 128 instructions.

Selon un aspect de l'invention, on acroît la capacité de la mémoire de contrôle 10 à $2^N$ blocs de 128 instructions en utilisant N des sorties du contrôleur logique comme pointeur de bloc pour sélectionner un des N blocs, et l'adresse de saut contenue dans l'instruction SAUT pour sélectionner une des 128 instructions du bloc sélectionné. Sur l'exemple de réalisation illustré sur la figure 1, on utilise quatre des sorties (sorties 0 à 3) du démultiplexeur RO 2 comme pointeur de bloc et la capacité de la mémoire de contrôle 10 est portée à seize blocs de 128 instructions. Le registre d'adresse d'instruction IAR est constitué par un compteur à onze étages, les quatre bits de plus fort poids du registre IAR permettant d'adresser seize blocs de 128 instructions et les sept bits de plus faible poids permettant d'adresser les 128 instructions du bloc adressé par les quatre bits de plus fort poids. Quand une instruction SAUT est exécutée, la ligne Saut 39 est au niveau haut et la porte de transfert 40 applique respectivement l'adresse de saut sur le bus 41 et le pointeur de bloc sur le bus 42 aux sept étages de plus faible poids et aux quatre étages de plus fort poids du registre IAR. En écrivant la suite d'instructions, le programmeur doit avoir en tête que dans l'exécution d'une instruction SAUT le pointeur de bloc est formé par les sorties 0 à 3 du démultiplexeur RO 2 et doit donc préalablement à toute instruction SAUT écrire ces sorties dans l'état approprié par des instructions ECRITURE. Par exemple, si une opération de saut à l'adresse 100 du bloc 2 doit être prévue, il faudra tout d'abord mettre respectivement à 0, 0, 1 et 0 les sorties 0, 1, 2 et 3 du démultiplexeur RO 2 par des instructions ECRITURE puis prévoir une instruction SAUT spécifiant l'adresse de saut 1100100.

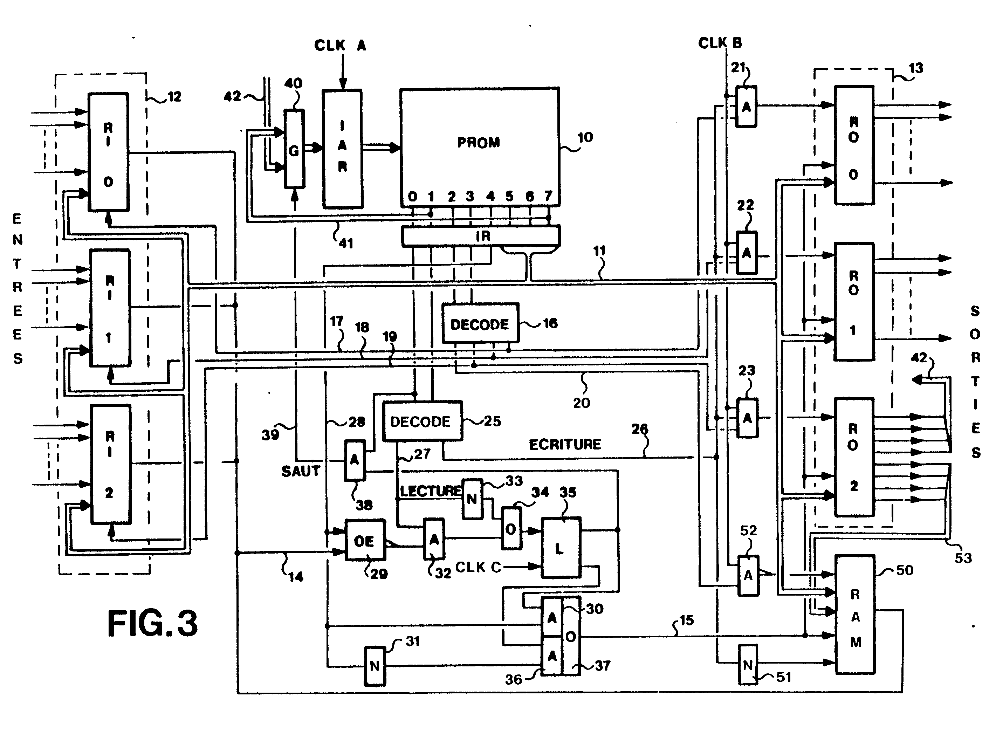

On a représenté sur la figure 3 le bloc diagramme du contrôleur logique de la figure 1 perfectionné par l'adjonction d'une mémoire à accès aléatoire de travail qui permet de garder en mémoire les états passés des entrées du contrôleur. Le contrôleur de la figure 3 diffère de celui de la figure 1 par le fait qu'on a remplacé le multiplexeur RI 3 et le démultiplexeur à mémoire RO 3 par une mémoire de travail 50. Dans un souci de clarté, on a gardé les mêmes références pour les éléments communs aux figures 3 et 1. La mémoire de travail 50 est constitué par une mémoire à accès aléatoire (RAM) de 128x1 bits dont l'entrée de données est reliée à la ligne de sortie de données 15 et dont la sortie de données est reliée à la ligne d'entrée de données 14. L'entrée lecture/ écriture de la mémoire de travail 50 est reliée à la ligne Ecriture 26 à travers un inverseur 51. La mémoire de travail 50 fonctionne en mode lecture ou écriture selon que son entrée lecture/ écriture est à un niveau haut ou bas, respectivement. L'entrée de sélection de la mémoire de travail 50 est reliée à la sortie d'une porte NON ET 52 dont une entrée est reliée à la ligne 20 et l'autre entrée reçoit le signal CLK B. La mémoire de travail 50 est organisée en seize blocs de huit bits. La sélection d'un bloc est réalisée par un pointeur de bloc fourni par les quatre sorties 4 à 7 du démultiplexeur RO 2 et qui est appliqué par un bus 53 aux quatre positions de plus fort poids de l'entrée d'adresse de la mémoire de travail 50. Le bus d'adresse 11 est appliqué aux trois positions de plus faible poids de l'entrée d'adresse de la mémoire de travail 50 et permet de sélectionner un des huit bits du bloc sélectionné par le pointeur de bloc.

Si on supprimait le bus 53, la mémoire de travail 50, se comporterait, en mode lecture, exactement comme le multiplexeur RI 3 de la figure I et, en mode écriture, exactement comme le démultiplexeur RO 3. Sa capacité serait alors limitée à huit bits, adressés par l'adresse sur le bus d'adresse 11. L'utilisation de M sorties du contrôleur comme pointeur de bloc permet de porter la capacité de la mémoire de travail à $2^M$ blocs de huit bits de la même façon qu'on a accru la capacité de la mémoire de contrôle 10.

Dans l'exemple de réalisation illustré sur la figure 3 la capacité de la mémoire de travail 50 est portée à seize blocs par l'utilisation des quatre sorties 3 à 7 du démultiplexeur RO 2.

Lorsqu'une instruction LECTURE ayant ses bits 2 et 3 à 1 est lue de la mémoire de contrôle 10, le circuit de décodage 16 fait passer la ligne 20 au niveau haut et le circuit de décodage 25 fait passer la ligne Ecriture 26 au niveau bas. La ligne Ecriture 26 étant au niveau bas, la sortie de l'inverseur 51 est au niveau haut et place la mémoire de travail 50 en mode lecture. A la transition positive du signal CLK B, la sortie de la porte NON ET 52 passe au niveau bas sélectionnant la mémoire de travail 50 et la position de 1 bit adressée par l'ensemble des

6

contenus des bus 11 et 53 est lue sur la ligne d'entrée de données 14. L'état de la ligne d'entrée de données 14 est comparé avec celui du bit de condition dans le registre IR et le résultat de la comparaison est utilisé pour commander la bascule de condition, comme décrit plus haut en référence à la figure 1.

Lorsqu'une instruction ECRITURE ayant ses bits 2 à 4 à 1 est lue de la mémoire de contrôle 10, le circuit de décodage fait passer la ligne 20 au niveau haut et le circuit de décodage 25 fait passer la ligne Ecriture 26 au niveau haut. La ligne Ecriture 26 étant au niveau haut, la sortie de l'inverseur 51 est au niveau bas et place la mémoire de travail 50 en mode écriture. A la transition positive du signal CLK B, la sortie de la porte NON ET 52 passe au niveau bas sélectionnant la mémoire de contrôle 50 et l'état de la ligne de sortie de données 15 est écrit à l'adresse spécifiée par l'ensemble des contenus des bus 11 et 53. Tout comme dans le cas de la manipulation des instructions SAUT, le programmeur doit avoir en tête que lorsqu'il veut accéder à la mémoire de travail 50, le pointeur de bloc est fourni par les sorties 4 à 7 des démultiplexeurs RO 2 et qu'il doit au préalable les écrire dans les états appropriés.

On décrira maintenant deux exemples de fonction de base qui permettront d'apprécier les avantages de l'invention.

## Exemple 1

Fonction ET de l'état de deux entrées I1 et I2 et résultat sur la sortie O1.

L'ensemble des instructions nécessaires pour réaliser cette fonction est le suivant:

| Adresse | Instruction |
|---------|-------------|
| 000 | RZ I1 |
| 001 | J 003 |
| 002 | RZ I2 |
| 003 | WZ 01 |

On remarquera que la réalisation de cette fonction ne nécessite que quatre instructions alors que la réalisation de cette même fonction au moyen du contrôleur logique programmable décrit dans le brevet français FR-A-2 037 035, nécessite six instructions.

## Exemple 2

Fonction OU Exclusif de l'état de deux entrées I1 et I2 et résultat sur la sortie O1.

| Adresse | Instruction |
|---------|-------------|
| 000 | RZ I1 |
| 001 | J 004 |
| 002 | RO I2 |
| 003 | WZ 01 |
| 004 | RO I2 |
| 005 | WO 01 |

On remarquera que la réalisation d'une fonction OU Exclusif ne nécessite que six instructions alors que la réalisation de cette même fonction au moyen du contrôleur logique programmable décrit dans le brevet français FR-A-2 037 035 nécessite neuf instructions.

## Revendications

1. Dispositif de commande logique programmable du type comprenant plusieurs entrées et plusieurs sorties, des moyens de sélection d'entrées (12) pour sélectionner une des entrées du dispositif de commande logique, des moyens de sélection de sorties (13) pour sélectionner l'une des sorties du dispositif de commande logique, une mémoire de contrôle (10) dans laquelle est emmagasinée une suite d'instructions, des moyens d'adressage (IAR) pour adresser séquentiellement la mémoire de contrôle, des moyens de décodage (16, 25) pour décoder les instructions lues de la mémoire de contrôle, et une bascule de condition (35), caractérisé en ce que:

les instructions emmagasinées dans la mémoire de contrôle sont choisies exclusivement parmi les instructions de trois types, les instructions du premier type (écriture) et du deuxième type (lecture) comprenant exclusivement un code opération, un bit de condition et un champ d'adresse, et les instructions du troisième

7

type (saut) comprenant exclusivement un code opération et un champ d'adresse,
et en ce qu'il comprend en outre:

des moyens de comparaison (29) pour comparer l'état de l'entrée sélectionnée par lesdits moyens de sélection d'entrées en réponse au contenu du champ d'adresse de l'instruction lue de la mémoire de contrôle, à l'état du bit de condition contenu dans cette instruction, lorsque cette dernière est une instruction du premier type,

des moyens (32) pour mettre la bascule de condition dans un premier ou second état selon que le résultat de la comparaison fourni par les moyens de comparaison est positif ou négatif, lorsque l'instruction lue de la mémoire de contrôle est du premier type,

des moyens (30, 31, 36, 37) pour transférer sur la sortie sélectionnée par lesdits moyens de sélection de sorties en réponse au contenu du champ d'adresse de l'instruction lue de la mémoire de contrôle, l'état ou l'état inverse, du bit de condition contenu dans cette instruction, selon que la bascule de condition est dans son premier ou second état, lorsque cette instruction est une instruction du deuxième type, et

des moyens (38, 41) pour appliquer le contenu du champ d'adresse d'une instruction du troisième type lue de la mémoire de contrôle aux moyens d'adressage (IAR), uniquement lorsque la bascule de condition est à son premier état.

2. Dispositif de commande logique programmable selon la revendication 1, caractérisé en ce que la mémoire de contrôle est organisée en $2^N$ blocs, et en ce qu'il comprend des moyens (42) pour appliquer N des sorties du dispositif de commande logique aux moyens d'adressage (IAR) lorsqu'une instruction du troisième type est lue de la mémoire de contrôle et que la bascule de condition est à son premier état.

3. Dispositif de commande logique programmable selon la revendication 1, caractérisé en ce qu'il comprend une mémoire à accès aléatoire (50) qui est adressée par le champ d'adresse de l'instruction lue de la mémoire, et qui fonctionne en mode lecture ou écriture selon qu'une instruction du premier ou du second type est lue de la mémoire.

4. Dispositif de commande logique programmable selon la revendication 3, caractérisé en ce que la mémoire à accès aléatoire est organisée en $2^M$ blocs et en ce qu'il comprend des moyens (53) pour appliquer M des sorties du dispositif de commande logique à l'entrée d'adresse de la mémoire à accès aléatoire, comme pointeur de bloc.

## Patentansprüche

1. Programmierbare logische Steuereinrichtung vom Typ, der mehrere Eingänge und mehrere Ausgänge, Auswahlmittel zur Wahl eines der Eingänge (12) der logischen Steuereinrichtung, Auswahlmittel zur Wahl eines der Ausgänge (13) der logischen Steuereinrichtung, einen Kontrollspeicher (10) mit einer eingespeicherten Folge von Anweisungen, Adressiermittel (IAR) zum sequentiellen Adressieren des Kontrollspeichers, Decodiermittel (16, 25) zum Decodieren der im Kontrollspeicher gelesenen Anweisungen und eine Bedingungskippschaltung (35) aufweist, dadurch gekennzeichnet, dass:

die Im Kontrollspeicher eingelagerten Anweisungen ausschliesslich unter den Anweisungen dreier Arten gewählt werden, Anweisungen der ersten Art (Schreiben) und der zweiten Art (Lesen), die ausschliesslich einen Operationscode, ein Bedingungsbit und ein Adressenfeld beinhalten, und Anweisungen der dritten Art (Sprung), die ausschliesslich einen Operationscode und ein Adressenfeld beinhalten,
und dadurch, dass sie weiter aufweist:

Vergleichsmittel (29), um den Zustand des gewählten Eingangs mittels der genannten Eingangsauswahlmittel als Antwort auf den Inhalt des Adressenfeldes der im Kontrollspeicher gelesenen Anweisung mit dem Zustand des in dieser Anweisung enthaltenen Bedingungsbits zu vergleichen, wenn diese Anweisung eine der ersten Art ist,

Mittel (32), um die Bedingungskippschaltung in einen ersten oder in einen zweiten Zustand zu versetzen, je nachdem, ob das Ergebnis des von den Vergleichsmitteln ausgeführten Vergleichs positiv oder negativ ist, wenn die im Kontrollspeicher gelesene Anweisung eine der ersten Art ist, Mittel (30, 31, 36, 37), um den Zustand oder den Kehrwert des Zustands des in dieser Anweisung enthaltenen Bedingungsbits dem Ausgang zu Übermitteln, der von den genannten Auswahlmitteln als Antwort auf den Inhalt des Adressenfeldes der im Kontrollspeicher gelesenen Anweisung ausgewählt wurde, je nachdem ob sich die Bedingungskippschaltung in ihrem ersten oder in ihrem zweiten Zustand befindet, wenn diese Anweisung eine der zweiten Art ist, und

Mittel (38, 41), um den Inhalt des Adressenfelds einer im Kontrollspeicher gelesenen Anweisung der dritten Art den Adressiermitteln (IAR) zu übertragen, aber nur, wenn die Bedingungskippschaltung sich in ihrem ersten Zustand befindet.

2. Programmierbare logische Steuereinrichtung nach Anspruch 1, dadurch gekennzeichnet, dass der Kontrollspeicher in $2^N$ Blöcke organisiert ist und dass diese Einrichtung Mittel (42) aufweist, um N der Ausgänge der logischen Steuereinrichtung den Adressiermitteln ( IAR) zu übertragen, wenn eine Anweisung der dritten Art im Kontrollspeicher gelesen wird und die Bedingungskippschaltung sich in ihrem ersten Zustand befindet.

3. Programmierbare logische Steuereinrichtung nach Anspruch 1, dadurch gekennzeichnet, dass sie einen RAM-Speicher (50) aufweist, der vom Adressenfeld der im Speicher gelesenen Anweisung adressiert wird, und

**0 112 427**

die in Lese- oder in Schreibe-Betriebsart funktioniert, je nachdem ob eine Anweisung erster oder zweiter Art im Speicher gelesen wird.

4. Programmierbare logische Steuereinrichtung nach Anspruch 2, dadurch gekennzeichnet, dass der RAM-Speicher in $2^M$ Blöcke organisiert ist und dass diese Einrichtung Mittel (53) aufweist, um M der Ausgänge der logischen Steuereinrichtung dem Adressiereingang des RAM-Speichers als Blockpointer zu übertragen.

### Claims

1. A programmable logic controller of the type including a plurality of inputs and outputs, input selection means (12) for selecting one of the inputs of the logic controller, output selection means (13) for selecting one of the outputs of the logic controller, a control memory (10) storing a sequence of instructions, addressing means (IAR) for sequentially addressing the control memory, decoding means (16, 35) for decoding instructions read out of the control memory, and a condition latch (35), characterized in that:

instructions stored in the control memory are solely selected from instructions of three types, with instructions of the first type (write) and of the second type (read) solely comprising an operation code, a condition bit and an address field, and instructions of the third type (jump) solely comprising an operation code and an address field,

and in that it further includes:

comparison means (29) for comparing the state of the input selected by said input selection means in response to the address field of the instruction read out of the control memory, with the state of the condition bit contained in that instruction, when said instruction is of the first type,

means (32) for setting the condition latch to a first or to a second state depending on whether the result of the comparison supplied by said comparison means is positive or negative, when the instruction read out of the control memory is of the first type,

means (30, 31, 36, 37) responsive to the content of the address field of the instruction read out of the control memory to transfer to the output selected by said output selection means the state, or the inverse thereof, of the condition bit contained in that instruction depending on whether the condition latch is set to its first or to its second state, when said instruction is of the second type, and

means (38, 41) for applying the content of the address field of an instruction of the third type read out of the control memory to the addressing means (IAR), only when the condition latch is set to its first state.

2. A programmable logic controller according to claim 1, characterized in that the control memory is arranged in $2^N$ blocks and in that it includes means (42) for applying N of the logic controller outputs to the addressing means (IAR) when an instruction of the third type is read out of the control memory and the condition latch is set to its first state.

3. A programmable logic controller according to claim 1, characterized in that it includes a random access memory (50) that is addressed by the address field of the instruction read out of the memory, and operates in the read or write mode depending on whether the instruction read out of the memory is of the first or of the second type.

4. A programmable logic controller according to claim 3, characterized in that the random access memory is arranged in $2^M$ blocks, and in that it includes means (53) for applying M of the logic controller outputs to the address input of said random access memory as a block pointer.

9

FIG.1

CLK A

CLK B

CLK C

# FIG. 2

FIG.3